(19) Europäisches Patentamt
European Patent Office
Office européen des brevets

(11) **EP 4 139 670 B1**

(12) **EUROPÄISCHE PATENTSCHRIFT**

(45) Veröffentlichungstag und Bekanntmachung des Hinweises auf die Patenterteilung:
**29.01.2025 Patentblatt 2025/05**

(21) Anmeldenummer: **21719549.4**

(22) Anmeldetag: **12.04.2021**

(51) Internationale Patentklassifikation (IPC):
***G01N 27/417*** (2006.01)

(52) Gemeinsame Patentklassifikation (CPC):
**G01N 27/4175**

(86) Internationale Anmeldenummer:
**PCT/EP2021/059403**

(87) Internationale Veröffentlichungsnummer:
**WO 2021/213826 (28.10.2021 Gazette 2021/43)**

(54) **VERFAHREN ZUR BESTIMMUNG EINER SAUERSTOFFKONZENTRATION IN EINEM ABGAS**

METHOD FOR DETERMINING AN OXYGEN CONCENTRATION IN A WASTE GAS

PROCÉDÉ DE DÉTERMINATION D'UNE CONCENTRATION D'OXYGÈNE DANS UN GAZ RÉSIDUAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.04.2020 DE 102020205020**

(43) Veröffentlichungstag der Anmeldung:
**01.03.2023 Patentblatt 2023/09**

(73) Patentinhaber: **Robert Bosch GmbH**
**70442 Stuttgart (DE)**

(72) Erfinder:
• **DAECKE, Dirk**
**70619 Stuttgart (DE)**
• **FIEDLER, Michael**
**71336 Waiblingen (DE)**

(56) Entgegenhaltungen:
WO-A1-02/04792     WO-A1-2018/166677
DE-A1- 102015 206 867     DE-A1- 102018 203 313
US-A1- 2009 145 778

**Beschreibung**

Stand der Technik

Aus dem Stand der Technik DE 10 2015 201 396 A1 ist bereits ein Sensorelement zur Messung einer Sauerstoffkonzentration in einem Abgas bekannt. Das Sensorelement weist einen Festelektrolyten, eine erste Elektrode, eine zweite Elektrode, eine dritte Elektrode und eine vierte Elektrode auf. Die erste Elektrode und die zweite Elektrode sind derart mit dem Festelektrolyten verbunden, dass die erste Elektrode, die zweite Elektrode und der Festelektrolyt eine Pumpzelle bilden. Die dritte Elektrode und die vierte Elektrode sind derart mit dem Festelektrolyten verbunden, dass die dritte Elektrode, die vierte Elektrode und der Festelektrolyt eine Nernstzelle bilden. Der Sensor weist weiterhin einen Regelkreis zum Regeln einer Nernstspannung der Nernstzelle auf. Der Regelkreis weist ein Regelgerät auf, das eine Stellgröße, eine erste Regelgröße und eine zweite Regelgröße aufweist, wobei die Stellgröße eine der Pumpzelle zugeführte Ausgangsgröße ist, die erste Regelgröße die Nernstspannung der Nernstzelle ist und die zweite Regelgröße eine Spannung an der ersten Elektrode ist.

Weitere Sensorelemente bzw. Verfahren zur Messung einer Sauerstoffkonzentration in einem Abgas sind aus der DE 10 2015 206 867 A1, der DE 10 2018 203 313 A1, der WO 2018/166677 A1, der WO 02/04792 A1 und der US 2009/145778 A1 bekannt.

Vorteile der Erfindung

Die vorliegende Erfindung basiert auf der Erkenntnis der Erfinder, dass die im Stand der Technik vorgesehene Verwendung der Spannung an der ersten Elektrode als Regelgröße mit dem Problem behaftet ist, dass diese Größe bei Abgasen im Bereich von $\lambda$=1 (also bei Abgasen, die aus einer Verbrennung resultieren, bei der Sauerstoff und Kraftstoff im stöchiometrischen Verhältnis vorliegen) hochgradig nichtlinear von der Sauerstoffkonzentration im Abgas abhängig ist, sodass bei einer Sauerstoffkonzentration im Abgas, die einem der zugrundeliegenden Verbrennung zugeführten Kraftstoff-LuftGemisch von $\lambda$=1 entspricht, eine Störung des Reglers resultiert, die für eine gewisse Zeit zu einer fehlerhaften Erfassung der Sauerstoffkonzentration in dem Abgas führt.

Die vorliegende Erfindung gemäß Anspruch 1 geht über diese bekannten Ansätze hinaus und betrifft ein Verfahren zur Bestimmung einer Sauerstoffkonzentration in einem Abgas mit einem Sensorelement. Dabei wird davon ausgegangen, dass das in dem erfindungsgemäßen Verfahren verwendete Sensorelement folgende strukturelle Merkmale aufweist: In seinem Inneren einen Hohlraum, der über eine Zutrittsöffnung mit dem Abgas verbunden ist, in seinem Inneren ferner einen Referenzraum, der von dem Hohlraum getrennt ist, eine elektrochemische Pumpzelle, die eine erste Elektrode aufweist, die auf der Außenseite des Sensorelements dem Abgas ausgesetzt ist, und die eine zweite Elektrode aufweist, die in dem Hohlraum angeordnet ist, und die einen ersten Festelektrolyten aufweist, über den die erste Elektrode mit der zweiten Elektrode Sauerstoff-Ionen leitend verbunden ist, eine elektrochemische Nernstzelle, die eine dritte Elektrode aufweist, die in dem Hohlraum angeordnet ist, und die eine vierte Elektrode aufweist, die in dem Referenzraum angeordnet ist, und die einen zweiten Festelektrolyten aufweist, über den die dritte Elektrode mit der vierten Elektrode Sauerstoff-Ionen leitend verbunden ist.

Es kann sich beispielsweise um ein planares, keramisches Sensorelement handeln, wie es aus dem Stand der Technik, beispielsweise aus der eingangs erwähnten DE 10 2015 201 396 A1, bereits grundsätzlich bekannt ist.

Bei den Festelektrolyten kann es sich beispielsweise um Bereiche des keramischen Sensorelements handeln, die aus mit Yttrium stabilisiertem Zirkonoxid (YSZ) bestehen und daher in erhöhten Temperaturbereichen eine Leitfähigkeit für Sauerstoff-Ionen aufweisen.

Der zweite Festelektrolyt kann getrennt von dem ersten Festelektrolyt ausgebildet sein oder in einer gemeinsamen Schichtebene des Sensorelements aus einem zusammenhängenden Bereich des Sensorelements aus einem Festelektrolytischen Material (z.B. YSZ).

Bei den Elektroden kann es sich zum Beispiel um Cermet-Elektroden handeln, die einen keramischen und einen edelmetallischen Anteil aufweisen. Bei dem Edelmetall kann es sich um Platin handeln. Die katalytische Aktivität der Elektroden kann durch Anteile weiterer Edelmetalle bzw. Anteile weiterer Stoffe passend gewählt werden, beispielsweise durch einen Goldanteil herabgesetzt sein.

Es kann vorgesehen sein, dass die dritte Elektrode in dem Hohlraum räumlich von der zweiten Elektrode beabstandet ist. Beispielsweise kann die dritte Elektrode in dem Hohlraum räumlich von der zweiten Elektrode weiter oder deutlich weiter (z.B. mindestens doppelt oder dreimal soweit) in einer seitlichen Richtung beabstandet sein, als es einer Höhe (also senkrecht zur seitlichen Richtung) des Hohlraums entspricht.

Es kann ferner vorgesehen sein, dass der Flächenschwerpunkt der dritten Elektrode in dem Hohlraum räumlich von dem Flächenschwerpunkt der zweiten Elektrode beabstandet ist. Beispielsweise kann der Flächenschwerpunkt der dritten Elektrode in dem Hohlraum räumlich von dem Flächenschwerpunkt der zweiten Elektrode deutlich weiter (z.B. mindestens doppelt oder fünfmal soweit) in einer seitlichen Richtung beabstandet sein, als es einer Höhe (also senkrecht zur seitlichen Richtung) des Hohlraums entspricht.

Das erfindungsgemäße Verfahren sieht vor, dass die sich in dem Hohlraum befindliche Sauerstoffkonzentration auf einen konstanten Wert geregelt wird, indem ein Nernstspannungssignal, das die sich an der Nernstzelle ausbildende Nernstspannung repräsentiert, erfasst wird, zumindest eine weitere Größe erfasst oder ermittelt wird, aus dem Nernstspannungssignal und aus der zumindest einen weiteren Größe ein kompensiertes Signal ermittelt wird, ein Fehlersignal als Differenz eines Sollwerts und des kompensierten Signals ermittelt wird, einem Regler das Fehlersignal als Eingangsgröße zugeführt wird, die Ausgangsgröße des Reglers an die Pumpzelle angelegt wird, sodass ein Stromfluss durch die Pumpzelle resultiert. Es sieht ferner vor, dass ein den Stromfluss durch die Pumpzelle repräsentierendes Signal als Messgröße der Sauerstoffkonzentration im Abgas ausgegeben wird.

Bei einem Signal, insbesondere bei einem Nernstspannungssignal, das die sich an der Nernstzelle ausbildende Nernstspannung repräsentiert, kann es sich einerseits um ein analoges Signal handeln, dessen Wert mit der Nernstspannung identisch ist. Es kann sich aber auch um ein analoges Signal handeln, das aus der Nernstspannung eineindeutig resultiert, also beispielsweise proportional zu der Nernstspannung ist. Es kann sich auch um die digitale Darstellung der genannten Signale handeln.

Analog dazu ist ein Signal, das den Stromfluss durch die Pumpzelle repräsentiert, zu verstehen. Es kann als analoges Signal durch den Strom identisch gegeben sein, es kann sich aber auch um ein analoges Signal handeln, das aus dem Strom eineindeutig resultiert, also beispielsweise der Spannungsabfall über einem Messwiderstand, der von dem Strom durchflossen wird und der in der Regel proportional zu dem Strom ist. Es kann sich auch um ein Signal handeln, das beispielsweise in einer Signalverarbeitung des erläuterten Reglers generiert wird, und gemäß dem (beispielsweise proportional zu dem) ein Stromfluss durch die Pumpzelle bewirkt wird. Es kann sich auch um die digitale Darstellung der genannten Signale handeln.

Analog dazu ist ein Signal, das die Spannung an der Pumpzelle repräsentiert, zu verstehen. Es kann als analoges Signal durch die Spannung zwischen der ersten Elektrode und der zweiten Elektrode identisch gegeben sein, es kann sich aber auch um ein analoges Signal handeln, das aus der Spannung eineindeutig resultiert, also beispielsweise der Strom über einen Messwiderstand, an dem die Spannung anliegt und der abhängig ist von (beispielsweise proportional ist zu) der Spannung. Es kann sich auch um die digitale Darstellung der genannten Signale handeln.

Bei dem Sollwert kann es sich einerseits um einen fest vorgegebenen Wert handeln. Andererseits kann es sich auch um einen Wert handeln, der zwar nicht vollständig konstant ist, sich jedoch innerhalb einer die Regelung charakterisierenden Zeitkonstante (z.B. 1s) nur sehr wenig ändert (z.B. weniger als 1%), beispielsweise in Reaktion auf gewisse äußere Ereignisse wie zur Kompensation von Alterungseffekten oder Temperaturdriften des Sensorelements oder einer mit dem Sensorelement zusammenarbeitenden Auswerteeinheit oder beispielsweise in Reaktion auf eine Änderung des Sauerstoffpartialdrucks in der Umgebungsluft des Sensorelements.

Es können auch verschiedene Betriebsarten vorgesehen sein (z.B. normale Betriebsart, Initialisierungs-Betriebsart, Selbstkalibrierungs-Betriebsart usw.), wobei innerhalb der jeweiligen Betriebsart ein individueller aber fester (oder nur sehr langsam variierender, siehe oben) Wert als Sollwert vorgesehen ist.

Die zumindest eine weitere Größe kann eine einzige Größe sein, die nicht die Nernstspannung und auch keine die Nernstspannung repräsentierende Größe ist. Es kann sich dabei um ein Pumpstromsignal, das einen Stromfluss durch die Pumpzelle repräsentiert, handeln; oder um ein Pumpzellensignal, das eine Spannung an der Pumpzelle repräsentiert, handeln.

Es kann in einer anderen Weiterbildung der Erfindung aber auch ausdrücklich ausgeschlossen werden, dass die weitere Größe ein Pumpzellensignal, das eine Spannung an der Pumpzelle repräsentiert, ist oder umfasst. Alternativ kann auch ausdrücklich ausgeschlossen werden, dass die weitere Größe als eine einzige Größe ein Pumpzellensignal, das eine Spannung an der Pumpzelle repräsentiert, ist.

Ist ausdrücklich ausgeschlossen, dass die weitere Größe zusammen mit anderen weiteren Größen die Spannung an der ersten Elektrode ist; und/oder ist ausdrücklich ausgeschlossen, dass die weitere Größe eine einzige weitere Größe die Spannung an der ersten Elektrode ist, so hat dies in beiden Fällen den Vorteil, dass in das kompensierte Signal diese zum Teil stark nichtlinear von der Sauerstoffkonzentration im Abgas abhängige Größe nicht bzw. nicht allein eingeht.

Die zumindest eine weitere Größe kann eine Mehrzahl von Größen sein, von denen jede einzelne nicht die Nernstspannung und auch keine die Nernstspannung repräsentierende Größe ist. Die Mehrzahl von Größen können zwei Größen, drei Größen oder mehr als drei Größen sein. Es kann dabei vorgesehen sein, dass die Mehrzahl zumindest zwei der folgenden Größen enthält: ein Pumpstromsignal, das einen Stromfluss durch die Pumpzelle repräsentiert; ein Pumpzellensignal, das eine Spannung an der Pumpzelle repräsentiert.

Insofern es sich bei der zumindest einen weiteren Größe um eine Mehrzahl von Größen handelt, bedeutet das Merkmal, dass aus dem Nernstspannungssignal und aus der zumindest einen weiteren Größe ein kompensiertes Signal ermittelt wird, dass das kompensierte Signal aus dem Nernstspannungssignal und aus jeder einzelnen Größe, die in der Mehrzahl der Größen enthalten ist, ermittelt wird, d.h. das kompensierte Signal ist abhängig von dem Nernstspannungssignal und von jeder der in der Mehrzahl der Größen enthaltenen Größe.

Es kann insbesondere vorgesehen sein, dass dem Regler das Fehlersignal als einzige Eingangsgröße des Reglers zugeführt wird. Es kann insbesondere vorgesehen sein, dass der Regler lediglich eine einzige Ausgangsgröße hat, nämlich die Ausgangsgröße, die (ggf. nach einer Verstärkung) an die Pumpzelle angelegt wird, sodass ein Stromfluss durch die Pumpzelle resultiert.

Es kann sich bei der Ausgangsgröße des Reglers bzw. bei der einzigen Ausgangsgröße des Reglers beispielsweise um eine gestellte Spannung oder um einen gestellten Strom handeln. Während die Verwendung einer gestellten Spannung den Vorteil hat, dass diese mit einfachen Mitteln realisierbar ist, hat die Verwendung eines gestellten Stroms im vorliegenden Fall den Vorteil eines stabileren Regelkreises.

Der Erfindung liegt die weitere Erkenntnis zugrunde, dass es innerhalb des Sensorelements bzw. innerhalb des Hohlraums aus regelungstechnischer Sicht zu Laufzeiten kommt. Wird Sauerstoff über die Pumpzelle in den Hohlraum hinein (oder aus dem Hohlraum heraus) transportiert, so ändert sich dadurch zwar sogleich die Sauerstoffkonzentration im Bereich der Pumpzelle, also im Bereich der zweiten Elektrode; die Nernstspannung ändert sich jedoch noch nicht sogleich, sondern erst, wenn sich die Sauerstoffkonzentration im Hohlraum auch im Bereich der Nernstzelle geändert hat, also im Bereich der dritten Elektrode. Je nach Geometrie des Hohlraums und der Anordnung der zweiten und der dritten Elektrode relativ zueinander im Hohlraum vergeht somit eine gewisse Zeit, bis innerhalb des Hohlraums Sauerstoffkonzentrationsänderungen an der Pumpzelle (zweite Elektrode) auch an der Nernstzelle (dritte Elektrode) auftreten.

Grundsätzlich mindern Laufzeiten innerhalb einer Regelstrecke die mögliche Regelbandbreite, also die Dynamik mit der stabil geregelt werden kann. Im vorliegenden Fall gilt dies für die Nernstspannung als Regelgröße, wie oben erläutert.

Die vorliegende Erfindung beruht nun aber gerade darauf, nicht die Nernstspannung als Regelgröße zu verwenden, sondern das kompensierte Signal. Das kompensierte Signal repräsentiert - besser als die Nernstspannung - die Sauerstoffkonzentration im gesamten Hohlraum, da es neben der Nernstspannung zumindest eine weitere Größe berücksichtigt und dadurch die Laufzeiteffekte innerhalb des Hohlraums - gleichsam durch deren rechnerische Vorwegnahme ausgehend von dem Nernstspannungssignal - kompensiert.

Der Pumpstrom und ihn repräsentierende Signale beinhalten die Information über Sauerstoff, der momentan im Bereich der Pumpzelle in den Hohlraum eingefügt wird. Die Verwendung des Pumpstroms als die zumindest eine weitere Größe eröffnet somit die Möglichkeit, die Änderungen der Sauerstoffkonzentration in dem Hohlraum in dem kompensierten Signal darzustellen, noch bevor sich die Nernstspannung entsprechend der Änderungen der Sauerstoffkonzentration in dem Hohlraum geändert hat. Mit anderen Worten: Es wird in dem kompensierten Signal die zukünftige Änderung der Nernstspannung vorweggenommen.

Ein Pumpzellensignal, das eine Spannung an der Pumpzelle repräsentiert, kann zum einen die "Nernstspannung" $U_{NP1}$ sein, die sich gemäß dem Zusammenhang

$$U_{NP1} = \frac{R \cdot T}{z \cdot F} \cdot \ln\left(\frac{P_{P1\,APE\,O2}}{P_{COM\,IPE\,O2}}\right)$$

ergibt, wobei $P_{P1APEO2}$ der Sauerstoff-Partialdruck an der ersten Elektrode und $P_{COM\,IPE\,O2}$ der Partialdruck an der zweiten Elektrode, also im Abgas ist. Es handelt sich also physikalisch gesehen bei dieser Potentialdifferenz tatsächlich um eine "Nernstspannung". Im Rahmen der Erfindung wird aber lediglich die Spannung zwischen der dritten Elektrode und der vierten Elektrode als Nernstspannung bezeichnet.

Ein Pumpzellensignal, das eine Spannung an der Pumpzelle repräsentiert, kann aber auch die Größe $U_{P1} = U_{NP1} + I_{P1}*R_{P1}$ sein, also die Summe aus der "Nernstspannung" $U_{NP1}$ und dem von dem Pumpstrom $I_{P1}$ durch die Pumpzelle und dem ohmschen Widerstand $R_{P1}$ der Pumpzelle verursachten Spannungsabfall.

Ein Pumpstromsignal kann andererseits auch die Größe $U_{NP1}$ - $U_{P1}$, also $I_{P1}*R_{P1}$ sein, da dieses Pumpstromsignal einen Strom, der durch die Pumpzelle fließt, repräsentiert.

Da der Hohlraum über eine Zutrittsöffnung mit dem Abgas verbunden ist, ist die in den Hohlraum oder aus dem Hohlraum transportierte Sauerstoffmenge proportional zur Partialdruckdifferenz zwischen Abgas und Hohlraum. Da diese gerade auch in dem Pumpzellensignal zum Ausdruck kommt, ist das Pumpzellensignal eine weitere Größe, die verwendbar ist, um ein kompensiertes Signal zu bilden, das die Sauerstoffkonzentration im Hohlraum präziser und dynamischer darzustellen vermag, als die Nernstspannung allein es kann.

Durch Verwendung des zeitlich verzögerten kompensierten Signals als zumindest eine weitere Größe kann eine Rückkopplung realisiert werden, durch die die Dynamik und die Stabilität der Kompensation mit Hinblick auf die Transportvorgänge im Inneren des Sensorelements optimiert werden. Im Zeitbild ausgedrückt und vereinfacht ausgedrückt soll die Kompensation beispielsweise möglichst genau in dem Umfang erfolgen, in dem die Nernstspannung die tatsächliche Sauerstoffkonzentration in dem Hohlraum unzureichend darstellt.

In einer digitalen, zeitdiskreten Realisierung der Erfindung sind die zeitlichen Verzögerungen in der Größenordnung von Abtasttakten, z.B. Ts = 1 ms. Das ist sehr klein verglichen mit den Zeitkonstanten $\tau$ der Gaskopplung zwischen der zweiten und der dritten Elektrode im Sensorelement, die beispielsweise $\tau$ = ca. 1000 ms oder mehr betragen.

Diese Rückkopplung ändert die Frequenzcharakteristik des Gesamtsystems. Sie kann zum Beispiel schmalbandiger oder breitbandiger werden.

Bei dem Sensorelement kann es sich um einen NOx-Sensor handeln, der nicht nur die Sauerstoffkonzentration, sondern auch die Stickoxidkonzentration in dem Abgas bestimmt. Dieser NOx-Sensor weist insbesondere folgende strukturelle Merkmale auf: In seinem Inneren einen weiteren Hohlraum, der mit dem Hohlraum verbunden ist, und eine weitere Pumpzelle, die eine fünfte Elektrode aufweist, die in dem weiteren Hohlraum angeordnet ist, und eine sechste Elektrode aufweist, die außerhalb des weiteren Hohlraums angeordnet ist, und einen dritten Festelektrolyten aufweist, der die fünfte Elektrode und die sechste Elektrode Sauerstoff-Ionen leitend miteinander verbindet.

Der Hohlraum kann von dem weiteren Hohlraum räumlich getrennt sein, beispielsweise durch ein kanalförmiges und/oder porös ausgefülltes Diffusionswiderstandselement. Es kann vorgesehen sein, dass die fünfte Elektrode aus einem katalytisch aktiveren Material besteht, als die zweite und/oder dritte Elektrode, sodass die fünfte Elektrode NOx katalytisch zu spalten vermag, nicht (oder in geringerem Maße) aber die zweite und/oder dritte Elektrode.

Der dritte Festelektrolyt kann getrennt von dem ersten Festelektrolyt ausgebildet sein oder, z.B. in einer gemeinsamen Schichtebene des Sensorelements, aus einem zusammenhängenden Bereich des Sensorelements aus einem festelektrolytischen Material (z.B. YSZ). Der dritte Festelektrolyt kann getrennt von dem zweiten Festelektrolyten ausgebildet sein oder, z.B. in einer gemeinsamen Schichtebene des Sensorelements, aus einem zusammenhängenden Bereich des Sensorelements aus einem festelektrolytischen Material (z.B. YSZ). Der erste, zweite und dritte Festelektrolyt können auch alle zusammen aus einem zusammenhängenden Bereich des Sensorelements aus einem festelektrolytischen Material (z.B. YSZ) ausgebildet sein.

Dieser NOx-Sensor kann betrieben werden, indem an die weitere Pumpzelle eine elektrische Spannung angelegt wird und eine den resultierenden Stromfluss durch die zweite Pumpzelle repräsentierende Größe als Messgröße der Stickoxidkonzentration im Abgas ausgegeben wird.

Es kann sich um einen NOx-Sensor handeln, der lediglich drei elektrochemische Zellen umfasst, nämlich die Pumpzelle, die Nernstzelle und die weitere Pumpzelle. So ein Sensor ist besonders einfach und profitiert besonders von der vorliegenden Erfindung.

Es kann sich auch um ein Sensorelement handeln, dass neben den Konzentrationen von Sauerstoff und NOx auch die Konzentration von NH3 und/oder anderen Gassorten im Abgas zu messen vermag.

Alternativ kann es sich bei den Sensorelement aber auch um eine zweizellige Breitband-Lambdasonde handeln.

Bei dem Sensorelement kann es sich um ein beheizbares Sensorelement handeln, das einen von außen kontaktierbaren elektrischen Widerstandsheizer aufweist. Die Beheizung kann insbesondere dadurch erfolgen, dass ein Temperatursignal, das eine Temperatur des Sensorelements repräsentiert, erfasst wird und mit einem weiteren Sollwert verglichen wird und ein weiterer Regler eine elektrische Versorgung des elektrischen Widerstandsheizers derart ansteuert, dass das Sensorelement die vorgegebene Temperatur annimmt. Der weitere Sollwert kann beispielsweise einer Temperatur des Sensorelements im Bereich von 700°C bis 800°C entsprechen.

Es kann sich bei dem weiteren Sollwert um einen fest vorgegebenen Wert handeln oder um einen Wert, der langsam (viel langsamer als durch die Zeitkonstante der weiteren Reglung gegeben) gemäß gewissen Ereignissen nachgeführt wird, beispielsweise gemäß einer Alterung des Sensorelements.

Die Ausgangsgröße des Reglers kann (ggf. nach DA-Wandlung und/oder Verstärkung) eine Spannung sein, die an die Pumpzelle angelegt wird, sodass ein Stromfluss durch die Pumpzelle resultiert. Alternativ kann die Ausgangsgröße des Reglers (ggf. nach DA-Wandlung und/oder Verstärkung) ein Strom sein. Hierzu ist die Vorsehung einer gesteuerten Stromquelle, die an die Pumpzelle angelegt wird, möglich. Die Vorsehung einer gesteuerten Spannungsquelle hat den Vorteil einer geringeren Komplexität. Die Vorsehung einer gesteuerten Stromquelle kann im vorliegenden Fall den Vorteil einer stabileren Regelung haben.

Eine wichtige Weiterbildung der Erfindung sieht vor, dass das kompensierte Signal aus dem Nernstspannungssignal und der zumindest einen weiteren Größe ermittelt wird, und zwar als Funktion des Nernstspannungssignals und dem Signal, das durch Hoch- und/oder Bandpassfilterung aus der zumindest einen weiteren Größe hervorgeht. Auf diese Weise lässt sich die Eignung des kompensierten Signals, die Sauerstoffkonzentration in dem Hohlraum präzise und mit hoher Dynamik darzustellen, weiter optimieren.

Insofern es sich bei der zumindest einen weiteren Größe um eine Mehrzahl von Größen handelt, kann aus der Mehrzahl der Größen zunächst eine einzige Eingangsgröße q für die Hoch- und/oder Bandpassfilterung ermittelt werden. Die Ausgangsgröße z der Hoch- und/oder Bandpassfilterung ist dann das angesprochene Signal, aus dem durch Summation mit dem Nernstspannungssignal das kompensierte Signal gebildet wird.

Beispielsweise kann die Eingangsgröße q aus einer linearen Funktion der Mehrzahl der Größen $g_i$ gebildet werden, also $q = \Sigma\, c_i * g_i$, mit vollumfänglich von Null verschiedenen Koeffizienten $c_i$. Alternativ können einzelne, aber nicht alle, $c_i$ Null sein.

Die Funktion zur Bestimmung des kompensierten Signals x aus dem Signal z (Ausgangsgröße der Hoch- und/oder Bandpassfilterung) und dem Nernstspannungssignal kann eine einfache mathematische Summenbildung sein, es kann aber auch eine gewichtete Summenbildung vorgesehen sein, so dass das kompensierte Signal x aus dem Nernstspannungssignal $U_{VS}$ und dem Signal z hervorgeht, beispielsweise gemäß $x = k_1 * U_{VS} + k_2 * z$ mit von Null verschiedenen Koeffizienten $k_1$ und $k_2$.

Es kann vorgehen sein, dass die Hoch- und/oder Bandpassfilterung mit Hinblick auf das Sensorelement und die Art und Weise, in der es betrieben wird, optimiert ist. Der Ausgang der Hoch- und/oder Bandpassfilterung ist insbesondere gleichanteilsfrei. Das reflektiert eine Situation, in der der Einfluss der weiteren Größe (beispielsweise des Pumpstroms) für statische Werte und für extrem langsame Änderungen der weiteren Größe (beispielsweise des Pumpstroms) durch den Regler bereits richtig berücksichtigt werden, wenn die Nernstspannung als Regelgröße verwendet wird. Mit Hinblick auf den statischen Fall bzw. auf die extrem langsamen Änderungen vermeidet diese gleichanteilsfreie Kompensation also eine Verfälschung der Regelgröße.

Es kann ferner insbesondere vorgesehen sein, dass die Hoch- und/oder Bandpassfilterung spektrale Anteile unterhalb von 0,5 Hz um mindestens 3dB dämpft.

Es kann ferner insbesondere vorgesehen sein, dass die Hoch- und/oder Bandpassfilterung spektrale Anteile zwischen von 2 Hz und 5 Hz um weniger als 3dB dämpft.

Die jeweiligen Schritte des Verfahrens können in einer Auswerte- und Steuereinheit durch analoge oder durch digitale Signalverarbeitungskomponenten vorgenommen werden. In jedem Fall weist die Auswerte- und Steuereinheit zur Durchführung des erfindungsgemäßen Verfahrens folgendes auf: Eingänge, um ein Nernstspannungssignal, das die sich an der Nernstzelle ausbildende Nernstspannung repräsentiert, zu erfassen, eine Signalverarbeitungseinheit, um aus dem Nernstspannungssignal und aus zumindest einer weiteren Größe, ein kompensiertes Signal zu ermitteln, einen Differenzbildner um ein Fehlersignal als eine Differenz eines Sollwerts mit dem kompensierten Signal zu ermitteln, einen Regler um ihm das Fehlersignal als Eingangsgröße zuzuführen, Ausgänge, um die Ausgangsgröße des Reglers an die Pumpzelle auszugeben, sodass ein Stromfluss durch die Pumpzelle mit dem Ziel erfolgt, die in dem Hohlraum befindliche Sauerstoffkonzentration auf einen konstanten Wert zu regeln, und um eine den Stromfluss durch die Pumpzelle repräsentierendes Signal als Messgröße der Sauerstoffkonzentration im Abgas auszugeben.

Die Signalverarbeitungseinheit, der Differenzbildner und der Regler können einerseits durch physikalische voneinander verschiedene Komponenten realisiert sein. Es kann sich anderseits auch ganz oder teilweise um Funktionen handeln, die gemeinsam innerhalb einer Recheneinheit realisiert sind.

Figuren

Figur 1    zeigt schematisch ein aus dem Stand der Technik bekanntes Sensorelement einer Breitband- Lambdasonde.

Figur 2    zeigt schematisch ein aus dem Stand der Technik bekanntes Sensorelement eines NOx-Sensors.

Figur 3    zeigt einen Ausschnitt eines aus dem Stand der Technik bekanntes Sensorelement eines NOx-Sensors.

Figur 4    zeigt ein Flussdiagramm eines Ausführungsbeispiels des erfindungsgemäßen Verfahrens.

Figur 5    zeigt das Sensorelement aus Figur 2 elektrisch verbunden mit einem Ausführbeispiel einer erfindungsgemäßen Auswerte und Steuereinheit.

Figur 6    zeigt beispielhaft die Signalverarbeitungseinheit der Auswerte- und Steuereinheit aus Figur 5.

Figur 7a, 7b    zeigen beispielhaft die Charakteristika des Filters der Signalverarbeitungseinheit aus Figur 6 (Fig. 7a: Amplitudengang; Fig. 7b zeitlicher Verlauf eines Eingangssignals und des zugehörigen Ausgangssignals).

Figur 8a, 8b    zeigen typische erfindungsgemäß erzeugte Messwerte.

Beschreibung der Ausführungsbeispiele

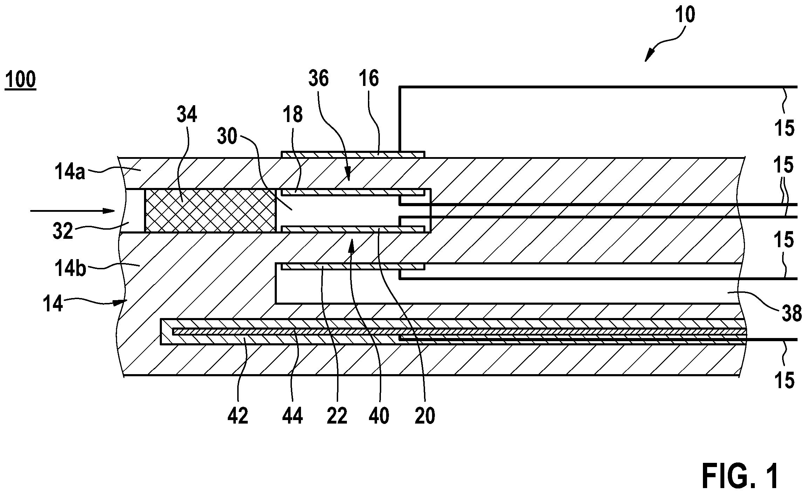

Figur 1 zeigt schematisch ein aus dem Stand der Technik grundsätzlich bereits bekanntes Sensorelement 10 einer Breitband- Lambdasonde, in Verbindung mit dem das erfindungsgemäße Verfahren beispielsweise durchführbar ist und in Verbindung mit dem die erfindungsgemäße Auswerte- und Steuereinheit beispielsweise betreibbar ist.

Das Sensorelement 10 weist in seinem Inneren einen Hohlraum 30 auf, der über eine Zutrittsöffnung 32 und über eine poröse Diffusionsbarriere 34 mit einem Abgas 100 fluidisch verbunden ist. Es weist in seinem Inneren ferner einen Referenzraum 38 auf, in dem sich ein Referenzgas befindet und der von dem Hohlraum 30 getrennt ist, d.h. innerhalb des Sensorelements 10 mit dem Hohlraum 30 nicht fluidisch verbunden ist. Bei dem Referenzgas kann es sich beispielsweise um Luft oder um Sauerstoff handeln. Der Referenzraum 38 ist beispielsweise mit der Luft der Umgebung fluidisch verbunden. Es kann sich allerdings auch um einen geschlossenen Raum innerhalb des Sensorelements 10 handeln, in dem beispielsweise ein gewisser Sauerstoffpartialdruck aufrechterhalten wird.

Das Sensorelement 10 weist ferner eine elektrochemische Pumpzelle 36 auf. Die elektrochemische Pumpzelle 36 besteht aus einer ersten Elektrode 16 (auch: äußere Pumpelektrode, APE), die auf der Außenseite des Sensorelements 10 dem Abgas 100 unmittelbar oder über eine gasdurchlässige Schutzschicht ausgesetzt ist, und aus einer zweiten Elektrode 18 (auch: innere Pumpelektrode, IPE), die in dem Hohlraum 30 angeordnet ist, und aus einem ersten Festelektrolyten 14a, über den die erste Elektrode 16 mit der zweiten Elektrode 18 Sauerstoff-Ionen leitend verbunden ist.

Das Sensorelement 10 weist ferner eine elektrochemische Nernstzelle 40 auf. Die elektrochemische Nernstzelle 40 besteht aus einer dritten Elektrode 20 (auch: Nernstelektrode, NE), die in dem Hohlraum 30 angeordnet ist, und aus einer vierten Elektrode 22 (auch: Referenzelektrode, RE) und aus einem zweiten Festelektrolyten 14b, über den die dritte Elektrode 20 mit der vierten Elektrode 22 Sauerstoff-Ionen leitend verbunden ist.

In diesem Beispiel sind der erste Festelektrolyt 14a und der zweite Festelektrolyt 14b gemeinsam als ein einziger zusammenhängender Festelektrolytkörper 14 ausgebildet. Alternativ können der erste Festelektrolyt 14a und der zweite Festelektrolyt 14b elektrisch voneinander isoliert sein, beispielsweise durch eine Schicht aus Aluminiumoxid.

Das Sensorelement 10 weist in diesem Beispiel ferner einen elektrischen Widerstandsheizer 44 auf, der mit einer Isolationsschicht 42 gegenüber dem Festelektrolytkörper 14 elektrisch isoliert ist. Mit dem elektrischen Widerstandsheizer 44 ist der Festelektrolytkörper 14 auf eine Temperatur beheizbar, bei der er eine Leitfähigkeit für Sauerstoff-Ionen aufweist, z.B. 780°C.

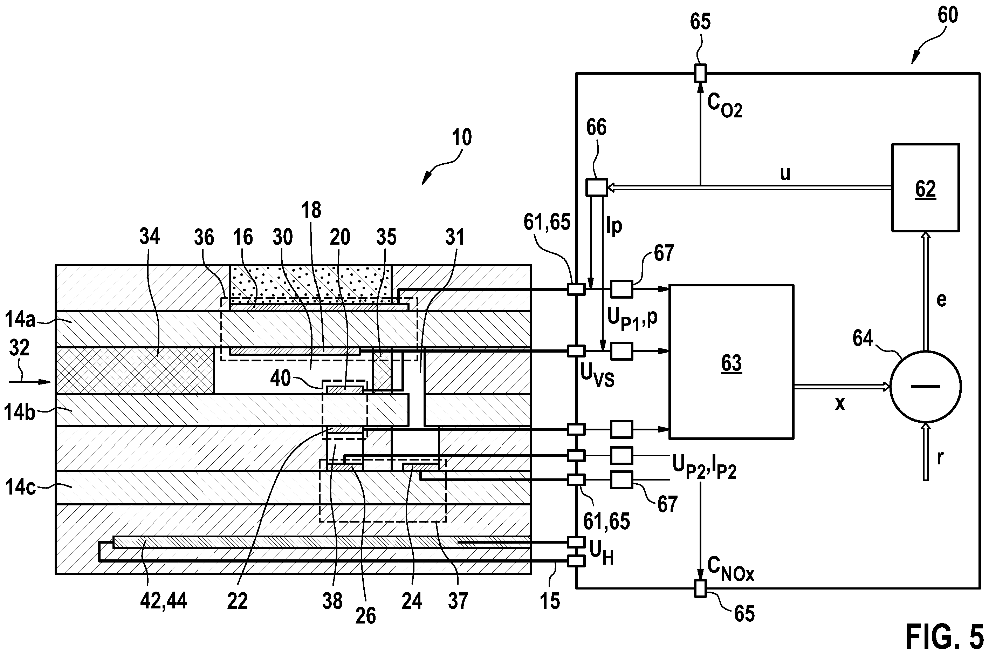

Die erste Elektrode 16, die zweite Elektrode 18, die dritte Elektrode 20, die vierte Elektrode 22 und der elektrische Widerstandsheizer 44 sind über Zuleitungen 15 des Sensorelements 10 elektrisch mit den Aus- und Eingängen einer Auswerte- und Steuereinrichtung 60 (siehe Figur 5) verbindbar.

Das grundsätzliche Funktionsprinzip des in der Figur 1 gezeigten Sensorelements 10 einer Breitband-Lambdasonde ist es, mit der Pumpzelle 36 als Stellelement und der Nernstzelle 40 als Messelement eine konstante Sauerstoffkonzentration in dem Hohlraum einzuregeln und den Pumpstrom als Messgröße für die Sauerstoffkonzentration $c_{O2}$ im Abgas 100 zu verwenden.

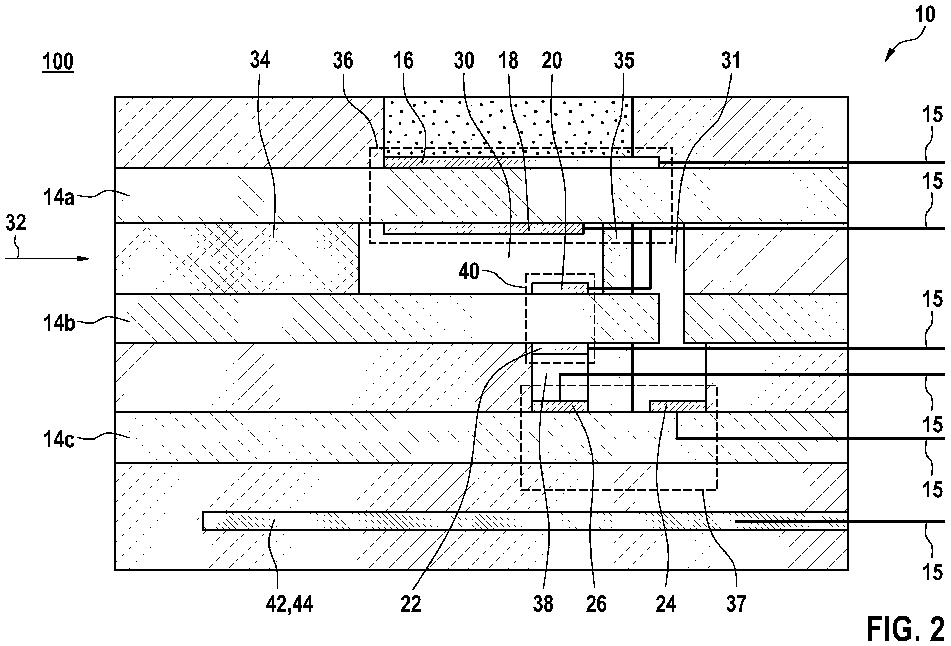

Figur 2 zeigt schematisch ein aus dem Stand der Technik grundsätzlich bereits bekanntes Sensorelement 10 eines NOx-Sensors, in Verbindung mit dem das erfindungsgemäße Verfahren beispielsweise durchführbar ist.

Wie das in Figur 1 gezeigte Sensorelement 10 weist es in seinem Inneren einen Hohlraum 30 auf, der über eine Zutrittsöffnung 32 und über eine poröse Diffusionsbarriere 34 mit einem Abgas 100 fluidisch verbunden ist. Es weist in seinem Inneren ferner einen Referenzraum 38 auf, in dem sich ein Referenzgas befindet und der von dem Hohlraum 30 getrennt ist.

Das Sensorelement 10 weist ferner eine elektrochemische Pumpzelle 36 auf. Die elektrochemische Pumpzelle 36 besteht aus einer ersten Elektrode 16 (auch: äußere Pumpelektrode, APE), die auf der Außenseite des Sensorelements 10 dem Abgas 100 unmittelbar oder über eine gasdurchlässige Schutzschicht ausgesetzt ist, und aus einer zweiten Elektrode 18 (auch: innere Pumpelektrode, IPE), die in dem Hohlraum 30 angeordnet ist, und aus einem ersten Festelektrolyten 14a, über den die erste Elektrode 16 mit der zweiten Elektrode 18 Sauerstoff-Ionen leitend verbunden ist.

Das Sensorelement 10 weist ferner eine elektrochemische Nernstzelle 40 auf. Die elektrochemische Nernstzelle 40 besteht aus einer dritten Elektrode 20 (auch: Nernstelektrode, NE), die in dem Hohlraum 30 angeordnet ist, und aus einer vierten Elektrode 22 (auch: Referenzelektrode, RE) und aus einem zweiten Festelektrolyten 14b, über den die dritte Elektrode 20 mit der vierten Elektrode 22 Sauerstoff-Ionen leitend verbunden ist.

Das Sensorelement 10 weist in diesem Beispiel ferner einen elektrischen Widerstandsheizer 44 auf.

Die erste Elektrode 16, die zweite Elektrode 18, die dritte Elektrode 20, die vierte Elektrode 22 und der elektrische Widerstandsheizer 44 sind über Zuleitungen 15 des Sensorelements 10 elektrisch mit den Aus- und Eingängen einer Auswerte- und Steuereinrichtung 60 verbindbar.

Ferner weist das Sensorelement 10 des NOx-Sensors in seinem Inneren einen weiteren Hohlraum 31 auf, der mit dem Hohlraum 30 fluidisch verbunden ist, beispielsweise über eine weitere poröse Diffusionsbarriere 35. Das Sensorelement 10 weist ferner eine weitere elektrochemische Pumpzelle 37 (auch: NOx-Zelle) auf, die eine fünfte Elektrode 24 (auch: NOx-Elektrode, NOE) umfasst, die in dem weiteren Hohlraum 31 angeordnet ist, und eine sechste Elektrode 26 (auch: NOCE NOx-Kammer-Elektrode) umfasst, die außerhalb des weiteren Hohlraums 31 angeordnet ist, und einen dritten Festelektrolyten 14c umfasst, der die fünfte Elektrode 24 und die sechste 26 Elektrode Sauerstoff-Ionen leitend miteinander verbindet.

Der dritte Festelektrolyt 14c kann, wie in diesem Beispiel, mit dem ersten Festelektrolyt 14a und dem zweiten Festelektrolyt 14b gemeinsam als ein einziger zusammenhängender Festelektrolytkörper 14 ausgebildet sein. Alternativ können der erste Festelektrolyt 14a, der zweite Festelektrolyt 14b und der dritte Festelektrolyt 14c aber auch paarweise elektrisch voneinander isoliert sein oder lediglich einer der drei genannten Festelektrolyte 14a, 14b, 14c könnte von den beiden anderen elektrisch isoliert sein.

Es ist vorgesehen, dass die fünfte Elektrode 24 aus einem katalytisch aktiveren Material besteht, als die zweite und dritte Elektrode 18, 20, sodass die fünfte Elektrode 24 NOx katalytisch zu spalten vermag, nicht (oder kaum) aber die zweite und dritte Elektrode 18, 20. Beispielsweise können die zweite und dritte Elektrode 18, 20 aus einem Cermet bestehen, dessen metallische Anteile jeweils sowohl Platin als auch Gold enthalten, während die fünfte Elektrode 24 als metallischen Anteil lediglich Platin und kein Gold enthält.

Das grundsätzliche Funktionsprinzip des in der Figur 2 gezeigten Sensorelements 10 eines NOx-Sensors ist es zunächst, ähnlich wie bei dem mit Bezug auf Figur 1 erläuterten Sensorelement einer Breitband-Lambdasonde, mit der Pumpzelle 36 als Stellelement und der Nernstzelle 40 als Messelement eine konstante Sauerstoffkonzentration in dem Hohlraum 30 einzuregeln und den Pumpstrom als Messgröße für die Sauerstoffkonzentration $C_{O2}$ im Abgas 100 zu verwenden.

Dies erfolgt vorliegend (Figur 2; Sensorelement eines NOx-Sensor) allerdings mit der Maßgabe, dass die katalytische Aktivität der zweiten und der dritten Elektrode 18, 20 bzw. die an die Pumpzelle 36 angelegte elektrische Spannung soweit reduziert ist, dass eine elektrochemische Spaltung von NOx-Molekülen zunächst noch ganz oder weitgehend unterbleibt.

Das grundsätzliche Funktionsprinzip des in der Figur 2 gezeigten Sensorelements 10 eines NOx-Sensors ist es weiterhin, an der fünften Elektrode NOx-Moleküle elektrochemisch zu spalten, die dabei frei werdenden Sauerstoffatome bzw. Sauerstoffionen mit der weiteren elektrochemischen Pumpzelle 37 elektrochemisch abzupumpen und den dabei fließenden weiteren Pumpstrom als Messgröße für die NOx-Konzentration $c_{NOx}$ im Abgas 100 zu verwenden. Insofern an der weiteren elektrochemischen Pumpzelle 37 auch verbliebener molekularer Sauerstoff ($O_2$) gespalten und elektrochemisch abgepumpt wird, geht dies als Beitrag in den weiteren Pumpstrom ein. Da die Sauerstoffkonzentration durch die an der elektrochemischen Nernstzelle 40 ausgebildete Nernstspannung $U_{Vs}$ allerdings genau bekannt ist, kann dieser Beitrag rechnerisch abgezogen werden.

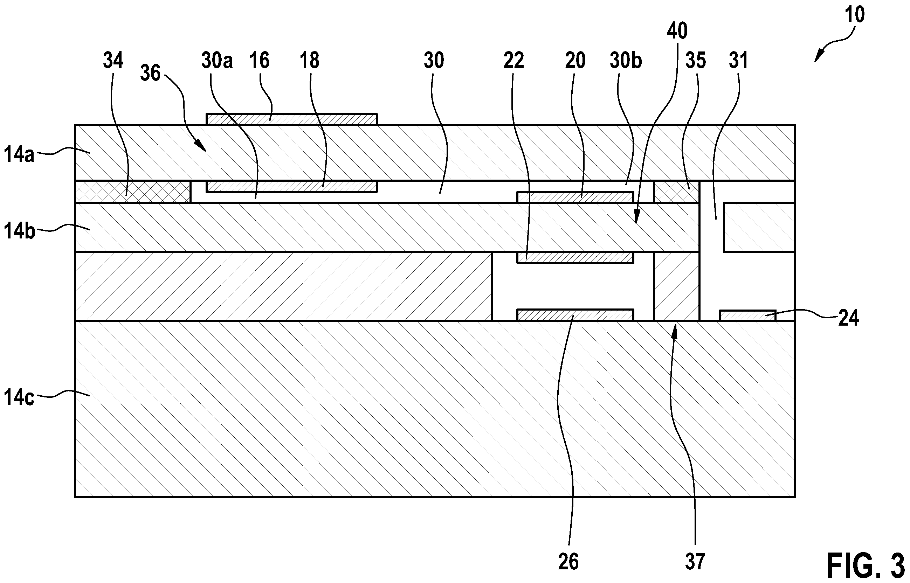

Figur 3 zeigt einen Ausschnitt des aus dem Stand der Technik grundsätzlich bereits bekannten Sensorelement 10 eines NOx-Sensors entsprechend Figur 2. In dieser Schnittdarstellung sind gewisse Dimensionierungen des Sensorelement 10 eines NOx-Sensors veranschaulicht.

Demgemäß ist der Hohlraum 30 eine in der Flussrichtung von in das Sensorelement 10 durch die Zutrittsöffnung 32 und die Diffusionsbarriere 34 eintretendem Abgas längliche und senkrecht dazu niedrige bzw. schmale Kammer. In seinem der Zutrittsöffnung 32 zugewandten Teil 30a ist die zweite Elektrode 18 flächig erstreckt. In seinem von der Zutrittsöffnung abgewandten Teil 30b ist die dritte Elektrode 20 flächig erstreckt.

Im Beispiel ist vorgesehen, dass der Flächenschwerpunkt der dritten Elektrode 20 in dem Hohlraum 30 seitlich (in Figur 3 von links nach rechts) von dem Flächenschwerpunkt der zweiten Elektrode 18 mindestens fünfmal soweit beabstandet ist, als es der Höhe (in Figur 3 von oben nach unten) des Hohlraums 30 entspricht.

Diese Dimensionierung hat einerseits den Vorteil, dass die an der Nernstzelle 40 ausgebildete Nernstspannung Uvs ein präzises Maß für die Sauerstoffkonzentration an der weiteren elektrochemischen Pumpzelle 37 ist, und somit auf Basis des weiteren Pumpstroms und dessen oben erläuterter rechnerischen Kompensation der NOx-Gehalt des Abgases 100 präzise feststellbar ist.

Andererseits vergeht aufgrund der Dimensionierung eine gewisse Zeit, bis innerhalb des Hohlraums 30 Sauerstoffkonzentrationsänderungen, die an der Zutrittsöffnung 32 bzw. an der Pumpzelle 36 (zweite Elektrode 18) erfolgen, auch an der Nernstzelle 40 (dritte Elektrode 20) auftreten und somit detektiert werden. Die Stabilisierung einer konstanten Sauerstoffkonzentration im Hohlraum 30 durch den oben erläuterten Regelkreis und die Bestimmung des Sauerstoffgehalts $c_{O2}$ des Abgases 100 ist somit ohne weitere Maßnahmen erschwert bzw. wenig dynamisch.

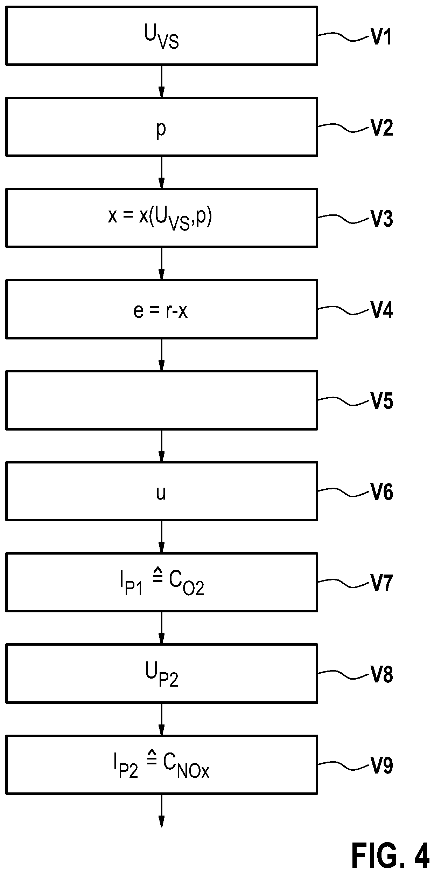

Das Verfahren und die Vorrichtung gemäß der vorliegenden Erfindung, die beispielhaft in Figuren 4 und 5 dargestellt sind, vermögen diesen Mangel zu überwinden. Es ist dazu zunächst vorgesehen, dass die sich in dem Hohlraum 30 befindliche Sauerstoffkonzentration auf einen konstanten Wert geregelt wird, beispielsweise in folgenden Verfahrensschritten V1 bis V6

- Im ersten Verfahrensschritt V1 erfasst eine über seine Eingänge 61 und seine AD-Wandler 67 mit den entsprechenden Zuleitungen 15 des Sensorelements 10 verbundene Auswerte- und Steuereinheit 60 ein Nernstspannungssignal, das die sich an der Nernstzelle 40 ausbildende Nernstspannung Uvs repräsentiert.

- In einem zweiten Verfahrensschritt V2 erfasst die Auswerte- und Steuereinheit 60 zumindest eine weitere Größe p, beispielsweise über entsprechende Eingänge 61 und AD-Wandler 67, die mit den entsprechenden Zuleitungen 15 des Sensorelements 10 verbunden sind.

- In einem dritten Verfahrensschritt V3 ermittelt eine Signalverarbeitungseinheit 63 der Auswerte- und Steuereinheit 60 aus dem Nernstspannungssignal und aus der zumindest einen weiteren Größe p ein kompensiertes Signal x.

- In einem vierten Verfahrensschritt V4 ermittelt ein Differenzbildner 64 der Auswerte- und Steuereinheit 60 ein Fehlersignal e als Differenz eines Sollwerts r und des kompensierten Signals x.

- In einem fünften Verfahrensschritt V5 wird einem Regler 62 (zum Beispiel PID-Regler) das Fehlersignal e als Eingangsgröße zugeführt.

- In einem sechsten Verfahrensschritt V6 wird die Ausgangsgröße u des Reglers 62 an die Pumpzelle 36 angelegt, sodass ein Stromfluss $I_{P1}$ durch die Pumpzelle 36 resultiert.

Die Ausgangsgröße des Reglers 62 kann dabei mit dem Stromfluss $I_{P1}$ durch die Pumpzelle 36 identisch sein. Es kann sich andererseits bei der Ausgangsgröße des Reglers 62 auch um eine Pumpspannung handeln oder um eine digitale Größe, die über einen DA-Wandler 66 an die Pumpzelle 36 angelegt wird.

In einem siebten Verfahrensschritt V7 ist vorgesehen, dass ein den Stromfluss $I_{P1}$ durch die Pumpzelle 36 repräsentierendes Signal als Messgröße der Sauerstoffkonzentration $c_{O2}$ im Abgas 100 über Ausgänge 65 der Auswerte- und Steuereinheit 60 ausgegeben wird, beispielsweise an ein mit der Auswerte-und Steuereinheit 60 verbundenes Motorsteuergerät.

Weiterhin ist in dem vorliegenden Beispiel folgendes vorgesehen:

- In einem achten Verfahrensschritt V8 wird über Ausgänge 65 der Auswerte- und Steuereinheit 60 und entsprechende Zuleitungen 15 des Sensorelements 10 eine elektrische Spannung $U_{P2}$ an die weitere Pumpzelle 37 angelegt.

- In einem neunten Verfahrensschritt V9 wird eine den resultierenden Stromfluss $I_{P2}$ durch die weitere Pumpzelle 37 repräsentierende Größe als Messgröße der Stickoxidkonzentration $c_{NOx}$ im Abgas 100 über Ausgänge 65 der Auswerte- und Steuereinheit 60 ausgegeben, beispielsweise an ein mit der Auswerte- und Steuereinheit 60 verbundenes Motorsteuergerät.

Bei der zumindest einen weiteren Größe p handelt es sich beispielsweise um eine einzige Größe, beispielsweise um ein Pumpstromsignal, das den Stromfluss $I_{P1}$ durch die Pumpzelle 36 repräsentiert, oder um ein Pumpzellensignal, das die Spannung $U_{P1}$ an der Pumpzelle 36 repräsentiert, oder um die Ausgangsgröße u des Reglers 62.

Bei der zumindest einen weiteren Größe p kann es ich auch um zwei Größen (bzw. um eine Mehrzahl von Größen, also 2, 3, 4 und so weiter) handeln, die insbesondere zumindest zwei (bzw. die zumindest die Mehrzahl) der folgenden Größen enthält: Ein Pumpstromsignal, das einen Stromfluss $I_{P1}$ durch die Pumpzelle 36 repräsentiert; ein Pumpzellensignal, das eine Spannung $U_{P1}$ an der Pumpzelle 36 repräsentiert; die Ausgangsgröße u des Reglers 62; ein zeitlich verzögerter Wert des kompensierten Signals x' (siehe Erläuterung unten).

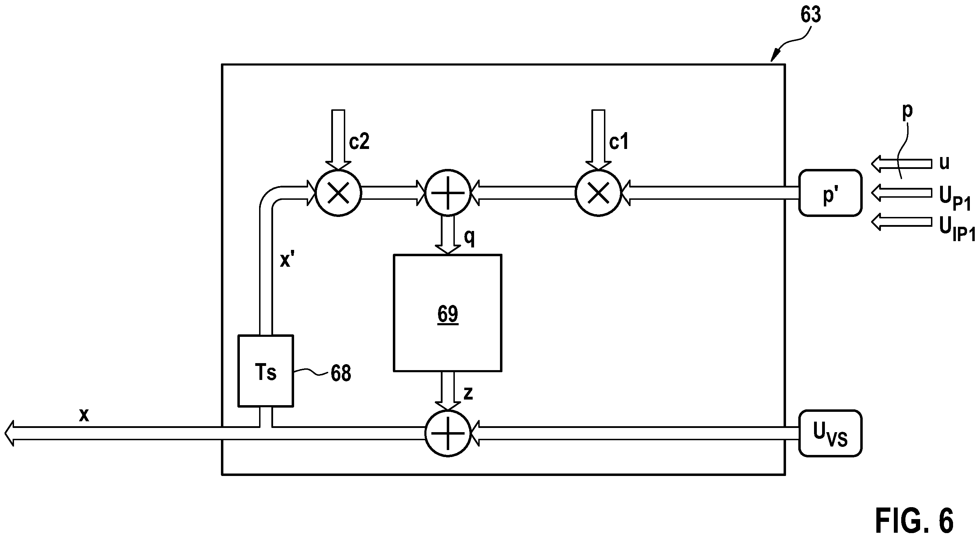

Es werden nun mit Bezug auf die Figur 6 der dritte Verfahrensschritt V3, in dem eine Signalverarbeitungseinheit 63 der Auswerte- und Steuereinheit 60 aus dem Nernstspannungssignal und aus der zumindest einen weiteren Größe p ein kompensiertes Signal x ermittelt, sowie die Struktur der Signalverarbeitungseinheit 63 der Auswerte- und Steuereinheit 60 näher erläutert.

In diesem Beispiel gehen in die Ermittlung des kompensierten Signals x neben der Nernstspannung $U_{Vs}$ zunächst drei weitere Größen p ein, nämlich der Stromfluss $I_{P1}$ durch die Pumpzelle 36, die an der Pumpzelle 36 zwischen der ersten Elektrode 16 und der zweiten Elektrode 18 anliegende Spannung $U_{P1}$ und die Ausgangsgröße u des Reglers 62. Durch gewichtete Summation wird aus diesen drei weiteren Größen im Beispiel eine einzige gemittelte weitere Größe p' gebildet, beispielsweise gemäß $p' = u * k1 + U_{p1} * k2 + U_{ip1} * k3$ wobei ki positive oder negative Vorzeichen haben können.

Eine Zwischengröße q wird wiederum durch gewichtete Mittelwertbildung gebildet aus der zuvor gebildeten weiteren Größe p' und dem zeitlich verzögerten Wert des kompensierten Signals x' (siehe Erläuterung unten).

Die Zwischengröße q wird beispielsweise berechnet gemäß der Formel $q = c1*p' + c2*x'$ mit positiven und/oder negativen aber jeweils von Null verschiedenen Koeffizienten c1, c2.

Im Beispiel ist vorgesehen, dass die Zwischengröße q die Eingangsgröße eines Filters 69, beispielsweise eines digitalen Filters 69 ist. Es kann sich beispielsweise um ein IIR-Filter handeln (infinite impuls response). Die Ausgangsgröße des digitalen Filters 69 ist z.

Im Beispiel wird das kompensierte Signal x als Summe der Ausgangsgröße z mit der Nernstspannung $U_{VS}$ errechnet. Alternativ kann das kompensierte Signal x auch durch die Bildung einer gewichteten Summe bzw. durch eine gewichtete Mittelwertbildung errechnet werden.

Das oben bereits erwähnte zeitlich verzögerte kompensierte Signal x' wird gebildet, indem das (zeitlich nicht verzögerte) kompensierte Signal x zeitlich verzögert wird, beispielsweise um einen zeitlichen Takt bei einer digitalen, zeitdiskreten Realisierung der Erfindung. Die Verzögerung Ts dient unter anderem dazu, einen sogenannten logischen Loop zu vermeiden. Die Verzögerung Ts erfolgt im Beispiel mit einem Verzögerungsglied 68 und beträgt beispielsweise 1 ms, was im Vergleich zu den Zeitkonstanten des Sensorelements 10 (z.B. typische Gaslaufzeit/Diffusionszeit innerhalb des Hohlraum 30 von der zweiten Elektrode 18 zur dritten Elektrode 20: 1000ms) ein sehr kleiner Wert ist.

Es ist im Beispiel vorgesehen, dass die Wirkung des Filters 69 einer Hoch und/oder Bandpassfilterung entspricht. Bei dem Filter 69 kann es sich also beispielsweise um einen Bandpass und/oder um einen Hochpass handeln.

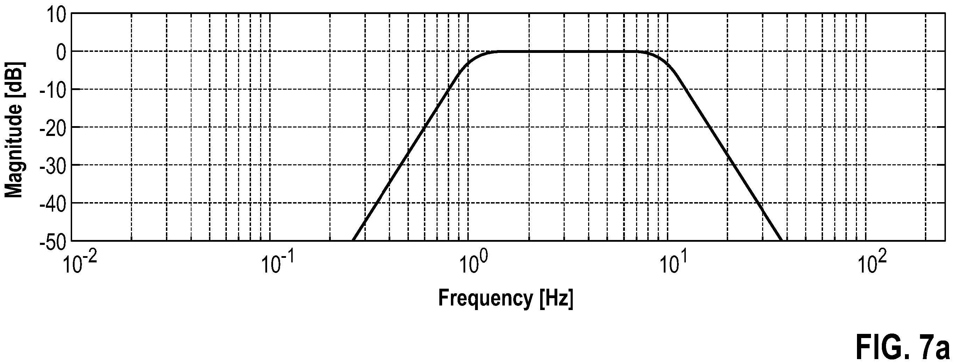

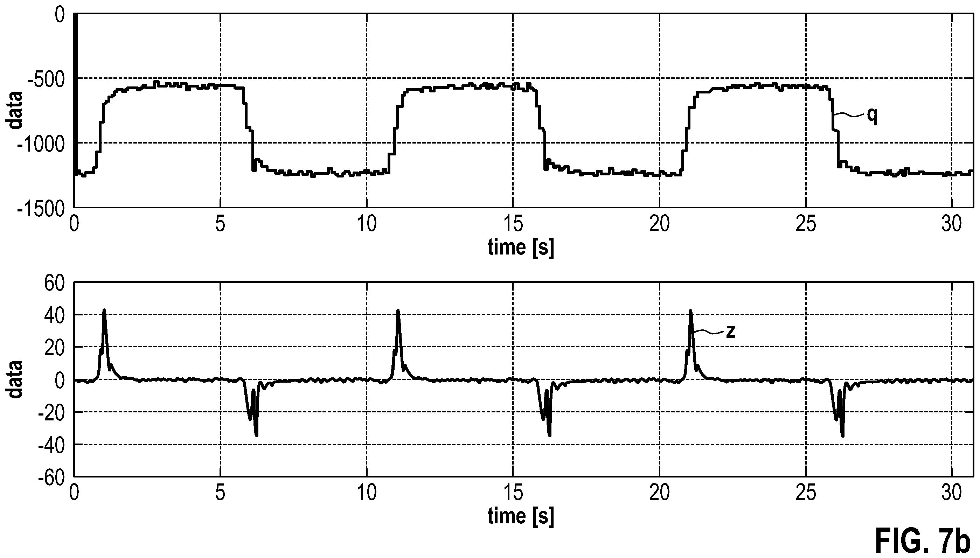

Im Beispiel bewirkt die Filterung, dass am Ausgang des Filters 69 ein mittelwertfreies Signal anliegt. Es kann ferner insbesondere vorgesehen sein, dass die Hoch- und/oder Bandpassfilterung spektrale Anteile unterhalb von 0,5 Hz um mindestens 3dB dämpft. Es kann ferner insbesondere vorgesehen sein, dass die Hoch- und/oder Bandpassfilterung spektrale Anteile zwischen von 2 Hz und 5 Hz um weniger als 3dB dämpft. Zusätzlich kann vorgesehen sein, dass durch die Filterung spektrale Anteile oberhalb von 20 Hz (Rauschen) um mehr als 3dB gedämpft werden. Ein beispielhafter Amplitudengang eines derartigen Filters 69 ist in der Figur 7a abgebildet. Die Figur 7b zeigt im oberen Teil beispielhaft den zeitlichen Verlauf eines Eingangssignals q in dieses Filter 69 und im unteren Teil den zeitlichen Verlauf des zugehörigen geglätteten und mittelwertfreien Ausgangssignals z aus diesem Filter 69.

Die Auswerte und Steuereinheit 60 (siehe zum Beispiel Figur 5) ist ferner dazu eingerichtet, die Temperatur des Sensorelements 10 auf eine vorgegebene Temperatur zu regeln. Hierzu wertet es beispielsweise den elektrischen Widerstand der Nernstzelle 40 und/oder der Pumpzelle 36 und/oder der weiteren Pumpzelle 37 aus. Der elektrische Widerstand bildet die Messgröße der Temperatur des Sensorelements 10, also das Temperatursignal. Dieses wird mit einem weiteren Sollwert verglichen und ein weiterer Regler steuert eine elektrische Versorgung des elektrischen Widerstandsheizers ($U_H$) derart an, dass das Sensorelement 10 eine vorgegebene Temperatur annimmt.

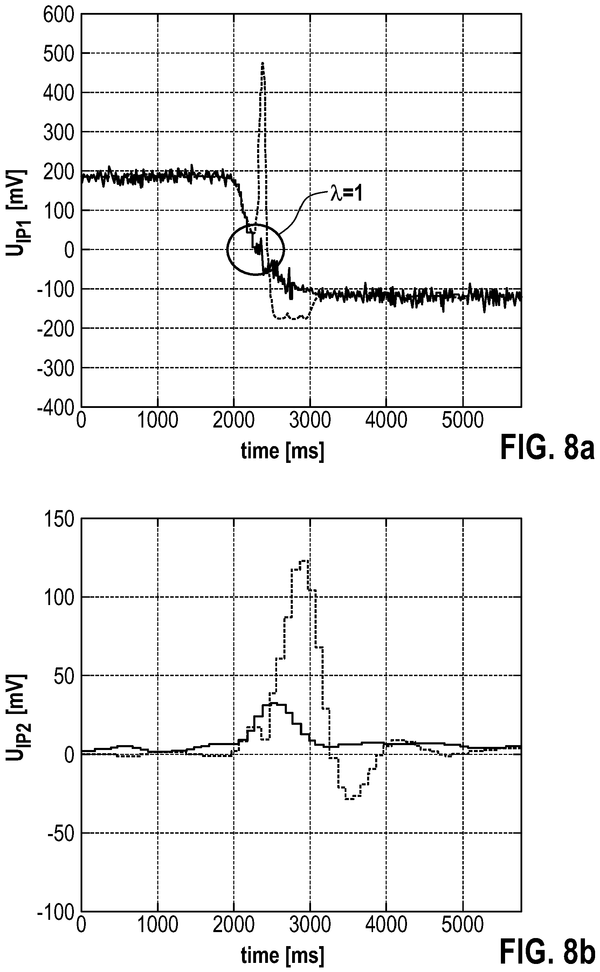

Die Fähigkeit der erfindungsgemäßen Vorrichtung und des erfindungsgemäßen Verfahrens mit einem Sensorelement 10, wie es in der Figur 2 abgebildet ist, sowohl eine Sauerstoffkonzentration $c_{O2}$ als auch eine Stickoxidkonzentration $c_{NOX}$ dynamisch und zugleich auch präzise zu messen, wurde verifiziert und anhand der Figuren 8a und 8b illustriert.

Dazu wurde ein Sensorelement 10 gemäß Figur 2 von einem Gasgemisch aus einer Gasmischeinrichtung umströmt. Das Gasgemisch bestand aus Stickstoff und Sauerstoff bei einem Wasseranteil von 1%. Bis zum Zeitpunkt 2000 ms war der Sauerstoffanteil relativ hoch (6%), entsprechend einem Abgas, das aus einer mageren Verbrennung resultiert. Entsprechend wurden positive Pumpströme $I_P$ gemessen ($U_{IP} > 0$). Nachfolgend war der Sauerstoffgehalt sehr niedrig entsprechend einer fetten Verbrennung mit einem Sauerstoffmangel von 1,5%. Entsprechend wurden negative Pumpströme $I_P$ gemessen ($U_{IP} < 0$).

Während bei aus dem Stand der Technik bekannten Verfahren und bekannten Auswerte-und Steuereinheiten bei dem Durchgang durch den $\lambda$=1 Punkt (als $U_{IP}$ = 0mV) eine ausgeprägte Welligkeit zu beobachten ist (gepunktete Linie in Figur 8a), unterbleibt diese Welligkeit mit dem erfindungsgemäßen Verfahren und der erfindungsgemäßen Auswerte-und Steuereinheit nahezu vollständig (durchgezogene Linie in Figur 8a).

In der Figur 8b ist die gemessene NOx-Konzentration $c_{NOx}$ dargestellt. Obwohl das Messgas eigentlich keinen NOx-Anteil aufweist, zeigen sowohl die bekannten Verfahren/ Vorrichtungen (gepunktete Linie in Figur 8b), als auch die erfindungsgemäßen (durchgezogene Linie in Figur 8b) ein transient von Null verschiedenes NOx-Signal bei dem Durchgang durch den $\lambda$=1 Punkt. Allerdings ist es mit dem erfindungsgemäßen Verfahren/Vorrichtung viel kleiner als mit den bekannten Verfahren/ Vorrichtungen.

**Patentansprüche**

1. Verfahren zur Bestimmung einer Sauerstoffkonzentration (cO2) in einem Abgas (100) mit einem Sensorelement (10), welches folgendes aufweist:

   - in seinem Inneren einen Hohlraum (30), der über eine Zutrittsöffnung (32) mit dem Abgas (100) verbunden ist,
   - in seinem Inneren ferner einen Referenzraum (38), der von dem Hohlraum (30) getrennt ist,
   - eine elektrochemische Pumpzelle (36), die eine erste Elektrode (16) aufweist, die auf der Außenseite des Sensorelements (10) dem Abgas (100) ausgesetzt ist, und die eine zweite Elektrode (18) aufweist, die in dem Hohlraum (30) angeordnet ist, und die einen ersten Festelektrolyten (14a) aufweist, über den die erste Elektrode (16) mit der zweiten Elektrode (18) Sauerstoff-Ionen leitend verbunden ist,
   - eine elektrochemische Nernstzelle (40), die eine dritte Elektrode (20) aufweist, die in dem Hohlraum (30) angeordnet ist, und die eine vierte Elektrode (22) aufweist, die in dem Referenzraum (38) angeordnet ist, und die einen zweiten Festelektrolyten (14b) aufweist, über den die dritte Elektrode (20) mit der vierten Elektrode (22) Sauerstoff-Ionen leitend verbunden ist,

   wobei das Verfahren vorsieht, dass die sich in dem Hohlraum (30) befindliche Sauerstoffkonzentration auf einen konstanten Wert geregelt wird, indem:

   - ein Nernstspannungssignal, das die sich an der Nernstzelle ausbildende Nernstspannung (Uvs) repräsentiert, erfasst wird,
   - zumindest eine weitere Größe (p) erfasst oder ermittelt wird, nämlich: ein Pumpstromsignal, das einen Stromfluss (IP1) durch die Pumpzelle (36) repräsentiert; und/oder ein Pumpzellensignal, das

   eine Spannung (UP1) an der Pumpzelle (36) repräsentiert,

   - aus dem Nernstspannungssignal und aus der zumindest einen weiteren Größe (p) ein kompensiertes Signal (x) ermittelt wird,
   - ein Fehlersignal (e) als Differenz eines Sollwerts (r) und des kompensierten Signals (x) ermittelt wird,
   - einem Regler (62) das Fehlersignal (e) als Eingangsgröße zugeführt wird,
   - die Ausgangsgröße (u) des Reglers (62) an die Pumpzelle (36) angelegt wird, sodass ein Stromfluss (IP1) durch die Pumpzelle (36) resultiert,

   und wobei das Verfahren vorsieht, dass ein den Stromfluss (IP1) durch die Pumpzelle (36) repräsentierendes Signal als Messgröße der Sauerstoffkonzentration (cO2) im Abgas (100) ausgegeben wird.

2. Verfahren nach Anspruch 1, **dadurch gekennzeichnet, dass** die zumindest eine weitere Größe (p) eine Mehrzahl von Größen ist, die beiden folgenden Größen enthält: ein Pumpstromsignal , das einen Stromfluss (IP1) durch die Pumpzelle repräsentiert; ein Pumpzellensignal, das eine Spannung (UP1) an der Pumpzelle (36) repräsentiert.

3. Verfahren nach einem der vorangehenden Ansprüche, **dadurch gekennzeichnet, dass** zusätzlich zu der Sauerstoffkonzentration (cO2) die Stickoxidkonzentration (cNOx) in dem Abgas (100) bestimmt wird, indem:

> das Sensorelement (10) in seinem Inneren einen weiteren Hohlraum (31) aufweist, der mit dem Hohlraum (30) verbunden ist, und das Sensorelement (10) eine weitere Pumpzelle (37) aufweist, die eine fünfte Elektrode (24) aufweist, die in dem weiteren Hohlraum (31) angeordnet ist, und eine sechste Elektrode (26) aufweist, die außerhalb des weiteren Hohlraums (31) angeordnet ist, und einen dritten Festelektrolyten (14c) aufweist, der die fünfte Elektrode (22) und die sechste Elektrode (24) Sauerstoff-Ionen leitend miteinander verbindet,
> wobei das Verfahren vorsieht, dass an die weitere Pumpzelle (37) eine elektrische Spannung (UP2) angelegt wird und eine den resultierenden Stromfluss (IP2) durch die zweite Pumpzelle (37) repräsentierende Größe als Messgröße der Stickoxidkonzentration (cNOx) im Abgas ausgegeben wird.

4. Verfahren nach einem der vorangehenden Ansprüche, **dadurch gekennzeichnet, dass** die Temperatur des Sensorelements (10) auf eine vorgegebene Temperatur geregelt wird, indem das Sensorelement (10) einen von außen kontaktierbaren elektrischen Widerstandsheizer (44) aufweist und indem das Verfahren vorsieht, dass ein Temperatursignal, das eine Temperatur des Sensorelements (10) repräsentiert, erfasst wird und mit einem weiteren Sollwert verglichen wird und ein weiterer Regler eine elektrische Versorgung des elektrischen Widerstandsheizers (44) derart ansteuert, dass das Sensorelement (10) die vorgegebene Temperatur annimmt.

5. Verfahren nach einem der vorangehenden Ansprüche, **dadurch gekennzeichnet, dass** die Ausgangsgröße (u) des Reglers (62) eine Spannung ist, die an die Pumpzelle (36) angelegt wird, sodass ein Stromfluss (IP1) durch die Pumpzelle (36) resultiert.

6. Verfahren nach einem der vorangehenden Ansprüche, **dadurch gekennzeichnet, dass** das kompensierte Signal (x) aus dem Nernstspannungssignal und der zumindest einen weiteren Größe (p) ermittelt wird, als Summe des Nernstspannungssignals mit einem Signal, das durch Hoch- und/oder Bandpassfilterung aus der zumindest einen weiteren Größe (p) hervorgeht.

7. Verfahren nach Anspruch 6, **dadurch gekennzeichnet, dass** die Hoch- und/oder Bandpassfilterung spektrale Anteile unterhalb von 0,5 Hz um mindestens 3dB dämpft.

8. Verfahren nach Anspruch 6 oder 7, **dadurch gekennzeichnet, dass** die Hoch- und/oder Bandpassfilterung spektrale Anteile zwischen von 2 Hz und 5 Hz um weniger als 3dB dämpft.

## Claims

1. Method for determining an oxygen concentration (cO2) in a waste gas (100) using a sensor element (10) which has the following:

> - in its interior, a cavity (30) which is connected to the waste gas (100) via an access opening (32),
> - in its interior, furthermore a reference space (38) which is separated from the cavity (30),
> - an electrochemical pump cell (36) that has a first electrode (16), which is exposed to the waste gas (100) on the outside of the sensor element (10), and that has a second electrode (18), which is arranged in the cavity (30), and that has a first solid electrolyte (14a) via which the first electrode (16) is connected to the second electrode (18) for the purpose of conducting oxygen ions,
> - an electrochemical Nernst cell (40) that has a third electrode (20), which is arranged in the cavity (30), and that has a fourth electrode (22), which is arranged in the reference space (38), and that has a second solid electrolyte (14b) via which the third electrode (20) is connected to the fourth electrode (22) for the purpose of conducting oxygen ions,
> wherein the method makes provision for the oxygen concentration in the cavity (30) to be regulated to a constant value by virtue of the fact that:

>> - a Nernst voltage signal representing the Nernst voltage (Uvs) forming across the Nernst cell is detected,
>> - at least one further variable (p) is detected or ascertained, namely: a pump current signal representing a current flow (IP1) through the pump cell (36); and/or a pump cell signal representing a voltage (UP1) across the pump cell (36),
>> - a compensated signal (x) is ascertained from the Nernst voltage signal and from the at least one further variable (p),
>> - a fault signal (e) is ascertained as the difference between a setpoint value (r) and the compensated signal (x),
>> - the fault signal (e) is supplied as an input variable to a controller (62),

- the output variable (u) of the controller (62) is applied to the pump cell (36) so that a current flow (IP1) through the pump cell (36) results,

and wherein the method makes provision for a signal representing the current flow (IP1) through the pump cell (36) to be output as a measurement variable of the oxygen concentration (cO2) in the waste gas (100).

2.  Method according to Claim 1, **characterized in that** the at least one further variable (p) is a plurality of variables which contains the two following variables: a pump current signal representing a current flow (IP1) through the pump cell; a pump cell signal representing a voltage (UP1) across the pump cell (36).

3.  Method according to either of the preceding claims, **characterized in that**, in addition to the oxygen concentration (cO2), the nitrogen oxide concentration (cNOx) in the waste gas (100) is determined by virtue of the fact that:
the sensor element (10) has in its interior a further cavity (31) which is connected to the cavity (30), and the sensor element (10) has a further pump cell (37) that has a fifth electrode (24), which is arranged in the further cavity (31), and a sixth electrode (26), which is arranged outside the further cavity (31), and a third solid electrolyte (14c) which connects the fifth electrode (22) and the sixth electrode (24) for the purpose of conducting oxygen ions, wherein the method makes provision for a voltage (UP2) to be applied to the further pump cell (37) and for a variable representing the resulting current flow (IP2) through the second pump cell (37) to be output as a measurement variable of the nitrogen oxide concentration (cNOx) in the waste gas.

4.  Method according to one of the preceding claims, **characterized in that** the temperature of the sensor element (10) is regulated to a predefined temperature by virtue of the fact that the sensor element (10) has an externally contactable electric resistance heater (44) and by virtue of the fact that the method makes provision for a temperature signal representing a temperature of the sensor element (10) to be detected and compared with a further setpoint value and for a further controller to actuate a supply of electrical power to the electric resistance heater (44) in such a way that the sensor element (10) adopts the predefined temperature.

5.  Method according to one of the preceding claims, **characterized in that** the output variable (u) of the controller (62) is a voltage which is applied to the pump cell (36) so that a current flow (IP1) through the pump cell (36) results.

6.  Method according to one of the preceding claims, **characterized in that** the compensated signal (x) is ascertained from the Nernst voltage signal and the at least one further variable (p) as the sum of the Nernst voltage signal and a signal which arises from the at least one further variable (p) as a result of high-pass and/or band-pass filtering.

7.  Method according to Claim 6, **characterized in that** the high-pass and/or band-pass filtering dampens spectral components below 0.5 Hz by at least 3 dB.

8.  Method according to Claim 6 or 7, **characterized in that** the high-pass and/or band-pass filtering dampens spectral components between 2 Hz and 5 Hz by less than 3 dB.

**Revendications**

1.  Procédé de détermination d'une concentration en oxygène (cO2) dans un gaz d'échappement (100) avec un élément capteur (10), lequel possède les éléments suivants :

- à l'intérieur de celui-ci, un espace creux (30) qui est relié au gaz d'échappement (100) par le biais d'une ouverture d'accès (32),
- à l'intérieur de celui-ci, en plus un espace de référence (38) qui est séparé de l'espace creux (30),
- une cellule de pompage électrochimique (36), qui possède une première électrode (16), qui est exposée au gaz d'échappement (100) sur le côté extérieur de l'élément capteur (10), et qui possède une deuxième électrode (18), qui est disposée dans l'espace creux (30) et qui comprend un premier électrolyte solide (14a) par le biais duquel la première électrode (16) est reliée à la deuxième électrode (18) de manière à conduire des ions oxygène,
- une cellule électrochimique de Nernst (40), qui possède une troisième électrode (20) qui est disposée dans l'espace creux (30), et qui possède une quatrième électrode (22) qui est disposée dans l'espace de référence (38), et qui comprend un deuxième électrolyte solide (14b) par le biais duquel la troisième électrode (20) est reliée à la quatrième électrode (22) de manière à conduire des ions oxygène,
le procédé prévoyant que la concentration en oxygène qui se trouve dans l'espace creux (30) est réglée à une valeur constante, par :

- acquisition d'un signal de tension de Nernst, qui représente la tension de Nernst (Uvs) se formant aux bornes de la cellule de Nernst,

- acquisition ou détermination d'au moins une grandeur supplémentaire (p), à savoir : un signal de courant de pompage, qui représente un flux de courant (IP1) à travers la cellule de pompage (36) ; et/ou un signal de cellule de pompage, qui représente une tension (UP1) aux bornes de la cellule de pompage (36),

- détermination d'un signal compensé (x) à partir du signal de tension de Nernst et à partir de l'au moins une grandeur supplémentaire (p),

- détermination d'un signal d'erreur (e) en tant que différence entre une valeur de consigne (r) et le signal compensé (x),

- acheminement du signal d'erreur (e) à un régulateur (62) en tant que grandeur d'entrée,

- application de la grandeur de sortie (u) du régulateur (62) à la cellule de pompage (36), de sorte qu'il en résulte un flux de courant (IP1) à travers la cellule de pompage (36),

et le procédé prévoyant qu'un signal qui représente le flux de courant (IP1) à travers la cellule de pompage (36) est délivré en tant que grandeur de mesure de la concentration en oxygène (cO2) dans le gaz d'échappement (100).

2. Procédé selon la revendication 1, **caractérisé en ce que** l'au moins une grandeur supplémentaire (p) est une pluralité de grandeurs, qui contient les deux grandeurs suivantes : un signal de courant de pompage qui représente un flux de courant (IP1) à travers la cellule de pompage ; un signal de cellule de pompage qui représente une tension (UP1) aux bornes de la cellule de pompage (36).

3. Procédé selon l'une des revendications précédentes, **caractérisé en ce que**, en plus de la concentration en oxygène (cO2), la concentration en oxydes d'azote (cNOx) dans les gaz d'échappement (100) est déterminée par le fait que : l'élément capteur (10) possède à l'intérieur de celui-ci un espace creux supplémentaire (31), qui est relié à l'espace creux (30), et l'élément de capteur (10) possède une cellule de pompage supplémentaire (37), qui possède une cinquième électrode (24) qui est disposée dans l'espace creux supplémentaire (31) et une sixième électrode (26) qui est disposée à l'extérieur de l'espace creux supplémentaire (31), et possède un troisième électrolyte solide (14c), qui relie entre elles la cinquième électrode (22) et la sixième électrode (24) de manière à conduire les ions oxygène, le procédé prévoyant qu'une tension électrique (UP2) est appliquée à la cellule de pompage supplémentaire (37) et qu'une grandeur représentant le flux de courant résultant (IP2) à travers la deuxième cellule de pompage (37) est délivrée en tant que grandeur de mesure de la concentration en oxydes d'azote (cNOx) dans les gaz d'échappement.

4. Procédé selon l'une des revendications précédentes, **caractérisé en ce que** la température de l'élément capteur (10) est régulée à une température prédéfinie, **en ce que** l'élément capteur (10) possède un élément chauffant résistif électrique (44) avec lequel le contact peut être établi depuis l'extérieur et **en ce que** le procédé prévoit qu'un signal de température, qui représente une température de l'élément capteur (10), est acquis et comparé à une valeur de consigne supplémentaire et qu'un régulateur supplémentaire commande une alimentation électrique de l'élément chauffant résistif électrique (44) de telle sorte que l'élément capteur (10) prenne la température prédéfinie.

5. Procédé selon l'une des revendications précédentes, **caractérisé en ce que** la grandeur de sortie (u) du régulateur (62) est une tension, qui est appliquée à la cellule de pompage (36), de sorte qu'il en résulte un flux de courant (IP1) à travers la cellule de pompage (36).

6. Procédé selon l'une des revendications précédentes, **caractérisé en ce que** le signal compensé (x) est déterminé à partir du signal de tension de Nernst et de l'au moins une grandeur supplémentaire (p), en tant que somme du signal de tension de Nernst avec un signal qui ressort de l'au moins une grandeur supplémentaire (p) par filtrage passe-haut et/ou passe-bande.

7. Procédé selon la revendication 6, **caractérisé en ce que** le filtrage passe-haut et/ou passe-bande atténue d'au moins 3 dB les composantes spectrales inférieures à 0,5 Hz.

8. Procédé selon la revendication 6 ou 7, **caractérisé en ce que** le filtrage passe-haut et/ou passe-bande atténue de moins de 3 dB les composantes spectrales entre 2 Hz et 5 Hz.

FIG. 1

FIG. 2

100

34 36 16 30 18 20 35 31

14a

32

40

14b

14c

42,44 22 38 26 24 37

10

15
15
15
15
15
15

EP 4 139 670 B1

FIG. 3

EP 4 139 670 B1

$$U_{VS}$$ — V1

$$p$$ — V2

$$x = x(U_{VS}, p)$$ — V3

$$e = r-x$$ — V4

V5

$$u$$ — V6

$$I_{P1} \mathrel{\widehat{=}} C_{O2}$$ — V7

$$U_{P2}$$ — V8

$$I_{P2} \mathrel{\widehat{=}} C_{NOx}$$ — V9

**FIG. 4**

FIG. 5

FIG. 6

FIG. 7a

FIG. 7b

FIG. 8a

FIG. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015201396 A1
- DE 102015206867 A1
- DE 102018203313 A1

- WO 2018166677 A1
- WO 0204792 A1
- US 2009145778 A1